# DEMANDE DE BREVET EUROPEEN

(11) **EP 0 768 526 A1**
(43) Date de publication de la demande: **16.04.1997**
(21) Numéro de dépôt: 96420308.7
(22) Date de dépôt: 11.10.1996
(51) Int. Cl.: G01N 21/89

(54) **Dispositif pour l'inspection et la détection automatique de défauts sur une bande en défilement, telle qu'une étoffe de textile**

(30) Priorité: 16.10.1995 FR 9512318
(71) Demandeur: ICBT MACOTEX, F-69740 Genas (FR)
(72) Inventeur: Laucournet, Gilles, 01800 St Maurice de Gourdans (FR)
(74) Mandataire: Laurent, Michel

(57) **Abrégé**

Dispositif pour l'inspection et la détection automatique de défauts sur une bande en défilement, telle qu'une étoffe textile, comprenant :
- un moyen (31) pour éclairer sur toute la largeur une portion de la bande qui défile sur le plan incliné (8), formé par une rampe (31) constituée par une pluralité de fibres optiques (45) disposées côte à côte, alimentées par au moins une source de lumière (40), destinée à former sur la bande qui défile, une raie (36) élémentaire de lumière réfléchie et stabilisée,
- un moyen d'acquisition (30) des images de la bande qui défile constitué par au moins une caméra (30) portant une barrette de capteurs photosensibles (58) sur lesquels se forme l'image de la raie (36) élémentaire de lumière,
- des moyens électroniques pour traiter ces images,
caractérisé en ce que la rampe (31) porte un barreau cylindrique transparent dont le point focal objet coïncide avec l'extrémité (48) des fibres optiques, de manière à focaliser la lumière émise sur la bande qui défile.

## Description

### Domaine technique

L'invention concerne un dispositif pour l'inspection et la détection automatique de défauts sur une bande en défilement, telle qu'une étoffe de textile. Elle concerne donc le domaine du contrôle de la qualité de bande de matière, plus particulièrement d'étoffe textile. Il s'agit donc d'un dispositif de visite par système de vision artificielle.

### Techniques antérieures

De manière connue, après la fabrication d'une étoffe textile notamment d'un tissu, il est généralement procédé à une opération supplémentaire appelée "visite" effectuée juste avant l'emballage. Cette opération consiste à faire défiler l'étoffe devant un opérateur qui détecte les éventuels défauts de fabrication ou d'aspect présents sur la bande en défilement. Matériellement, cette opération s'effectue sur une machine appelée "visiteuse" qui comprend des moyens de déroulement du tissu initialement mis sous la forme d'une ensouple, des moyens de mise sous tension dudit tissu, une table de visite et un poste d'enroulage de l'étoffe visitée.

De manière générale, les tables de visite sont inclinées de façon à présenter le tissu devant les yeux de l'opérateur. Cette table de visite comporte des moyens d'éclairage par dessus et/ou par dessous le tissu qui défile à examiner.

Malheureusement, les vitesses de défilement autorisées pour des inspections précises, sont limitées à vingt mètres par minute au maximum. Par ailleurs, le contrôle visuel nécessite la présence permanente d'un opérateur, dont on sait qu'il ne détecte qu'au plus la moitié des défauts présents et dont l'attention, du fait de la fatigue, fluctue en cours de journée.

Dans le document US-A- 4 619 527, on a proposé de faire appel à une détection automatique des défauts basée sur l'acquisition d'une image numérique du tissu et sur le traitement de cette image. Cette acquisition utilise des capteurs opto-électriques qui transforment la lumière transmise par les fils de tissu en un signal logique qui est ensuite mémorisé. Cette image numérique obtenue est ensuite traitée en vue de détecter les éventuels défauts du tissu. Le principe utilisé consiste à effectuer la différence des valeurs de luminosité qui sont obtenues en effectuant des moyennes de luminosité. Malheureusement, ce type de visiteuse, notamment à cause de l'unité de traitement, est très sensible aux différences de variations de lumière. Par ailleurs, les traitements complexes effectués sur les images ne permettent pas d'accroître sensiblement la vitesse de défilement du tissu.

Le document US 5 243 402 décrit un appareil permettant l'inspection d'une bande de défilement dans lequel l'éclairage de cette bande est localisé sur une raie lumineuse rectiligne. Cette raie lumineuse est obtenue à partir d'une source lumineuse traditionnelle associée à un faisceau de fibres optiques dont une extrémité est située à proximité de la source lumineuse tandis que l'autre extrémité est déployée sous forme d'un peigne formant rampe. Cette rampe est positionnée à proximité d'un miroir cylindrique concave destiné à focaliser la lumière émise par la rampe de fibres optiques sur la bande en défilement au niveau de la raie lumineuse. La fraction de lumière de la raie lumineuse ayant traversé la bande en défilement est ensuite captée par un système d'acquisition et de traitement. Cette installation nécessite l'utilisation d'un miroir cylindrique qui s'avère particulièrement encombrant et coûteux. En outre, compte-tenu du positionnement des extrémités des fibres optiques par rapport au miroir, pour obtenir une raie lumineuse fine, il convient de positionner la bande à inspecter de façon très précise par rapport aux points optiques caractéristiques. De la sorte, ce système est relativement sensible aux écarts de placement de la bande à observer. Il s'ensuit que les manoeuvres de mise en place de la bande à observer requièrent une grande minutie souvent incompatible avec une rapidité d'exécution.

Le problème que se propose de résoudre l'invention est de fournir une visiteuse fonctionnant de manière automatique dont l'éclairage de la zone sur laquelle a lieu le contrôle soit suffisamment puissant et réglable pour permettre une détection efficace des défauts, sans faire appel à l'opérateur, dont la présence est toutefois utile pour qualifier le défaut détecté.

### Description de l'invention

L'invention concerne un dispositif pour l'inspection et la détection automatique de défauts sur une bande en défilement, telle qu'une étoffe textile, comprenant :
- un moyen d'entraînement (3, 9, 10) d'un enroulement de la bande à inspecter,
- des organes de renvoi (7, 14, 15) et de mise sous tension (4, 5,6) de la bande en défilement,
- un plan incliné (8) pour l'observation de la bande qui défile à plat sur ce plan (8),
- un moyen (31) pour éclairer sur toute la largeur une portion de la bande qui défile sur le plan incliné (8), formé par une rampe (31) constituée par une pluralité de fibres optiques (45) disposées côte à côte, alimentées par au moins une source de lumière (40), destinée à former sur la bande qui défile, une raie (36) élémentaire de lumière réfléchie et stabilisée,
- un moyen d'acquisition (30) des images de la bande qui défile constitué par au moins une caméra (30) portant une barrette de capteurs photosensibles (58) sur lesquels se forme l'image de la raie (36) élémentaire de lumière,
- des moyens pour traiter ces images constitués d'un système électronique de traitement (32) destiné à élaborer des signaux de défauts en fonction des images émises par les caméras (30),
- un moyen (11, 17) pour renvider sous forme d'enroulement (12) la bande inspectée,
- des moyens (20) pour piloter les moyens d'entraînement (3, 16) et les moyens de renvidage (17) lorsqu'on détecte un signal défaut,
- un moyen (22) pour mémoriser le positionnement sur la bande des défauts détectés.

Ce dispositif se caractérise en ce que la rampe comporte un barreau cylindrique transparent dont le point focal objet coïncide avec l'extrémité des fibres optiques, de manière à focaliser la lumière émise sur la bande qui défile.

En d'autres termes, l'invention consiste à doter la rampe de fibres optiques d'un barreau cylindrique jouant le rôle optique d'une lentille convergente permettant de focaliser sous la forme d'un faisceau parallèle les différents rayons lumineux issus de la rampe de fibres optiques, grâce au positionnement des extrémités des fibres optiques au niveau du point focal objet de cette lentille. De la sorte, l'ensemble est insensible à la position précise de la bande défilante par rapport à la rampe. Autrement dit, il est possible d'éloigner la rampe du tissu d'une distance nettement supérieure à celle accessible dans l'Art Antérieur. Cela permet une plus grande maniabilité et facilite les opérations de mise en place manuelle du tissu.

Pour résoudre le problème posé de l'adaptation de l'éclairage en fonction de la nature de la bande à traiter, le réglage en inclinaison, en direction et en distance de la rampe d'éclairage par rapport au tissu est commandé par le système électronique en fonction de l'état de surface de la bande en défilement.

Pour résoudre le problème de l'éclairage puissant et concentré de la zone sur laquelle a lieu le contrôle, la source lumineuse est constituée d'une lampe halogène stabilisée associée à un filtre anticalorique disposé à une extrémité d'un faisceau compact de fibres optiques, dont l'autre extrémité se présente sous la forme d'une rampe rectiligne dans laquelle les fibres élémentaires sont disposées côte à côte. Le système d'éclairage utilise des fibres optiques pour former une bande rectiligne de lumière à partir de sources élémentaires lumineuses ponctuelles. Ainsi, l'invention utilise une pluralité de faisceaux de fibres optiques, une des extrémités de chaque faisceau regroupant et concentrant toutes les fibres optiques de manière à ce qu'elle capte la lumière émise par la source lumineuse, l'autre extrémité du faisceau étant déployée, écartée pour former une autre partition rectiligne de ces fibres optiques.

Pour permettre un déclenchement de la caméra lorsque la bande a défilé d'une longueur correspondant à la hauteur de l'image acquise par la caméra, et ceci en tenant compte des rapports optiques de réduction de cette caméra, le pas de codage du codeur est inférieur à la longueur de bande dont l'image est obtenue par le capteur photosensible linéaire. De cette manière, le déclenchement de la caméra est asservi au défilement de la bande, de sorte que les images prises successivement par la caméra permettent de reconstituer l'image complète de la bande défilante.

Avantageusement, l'unité centrale électronique de traitement comprend des cartes électroniques d'acquisition d'images connectées à la caméra et au codeur, des cartes électroniques de traitement parallèle, connectées auxdites cartes d'acquisition, et des cartes électroniques de dialogue avec les moyens de pilotage du dispositif. Ainsi, le traitement parallèle des images reçues de la caméra permet de diminuer notoirement le temps de traitement, et ainsi d'augmenter la vitesse de d'inspection, qui peut être doublée, voire triplée.

Dans une forme avantageuse de l'invention, le plan incliné d'inspection comprend une barre polie, réfléchissant la lumière, disposée à l'envers de la bande défilante, pour coïncider avec la raie élémentaire de lumière. Cette barre est destinée à réfléchir la partie de la lumière ayant traversé la bande défilante au travers des trous ou orifices ménagés dans la bande.

Dans une forme perfectionnée de l'invention, le dispositif comporte un second moyen d'éclairage destiné à éclairer la face du tissu en regard du plan incliné, pour observer le tissu en lumière transmise. Avantageusement, le second moyen d'éclairage est constitué par une seconde rampe constituée d'une pluralité de fibres optiques.

Pour permettre l'inspection de bandes de types très différents, notamment en ce qui concerne leur matière et le contraste du motif et de l'armure qu'elles comprennent, l'intensité de la source lumineuse est réglable en fonction du type de bande à inspecter.

Ainsi, le contraste de la bande peut être avantageusement déterminé grâce à l'invention lors d'une première acquisition permettant un calibrage automatique de l'intensité de la lumière en fonction de la qualité du tissu.

De cette manière, on utilise au maximum la puissance lumineuse disponible au niveau de la rampe d'éclairage, et on améliore ainsi la détection des défauts.

La manière de réaliser l'invention ainsi que les avantages qui en découlent ressortiront bien de l'exemple de réalisation qui suit à l'appui des figures annexées.

### Description sommaire des dessins

La figure 1 est un synoptique général d'ensemble de la visiteuse conforme à l'invention et de ses principaux organes de contrôle.

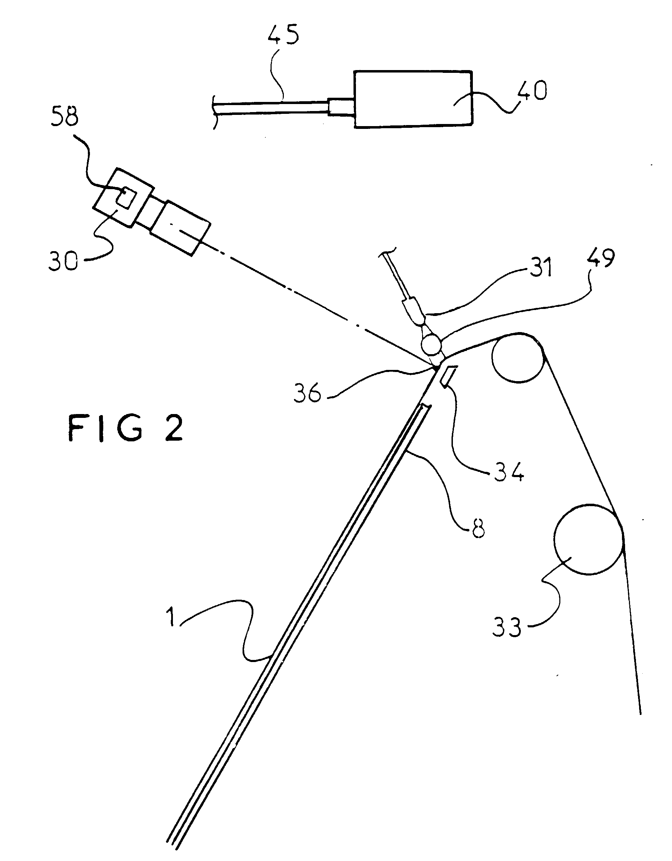

La figure 2 est une vue de détail de côté de la zone d'éclairage.

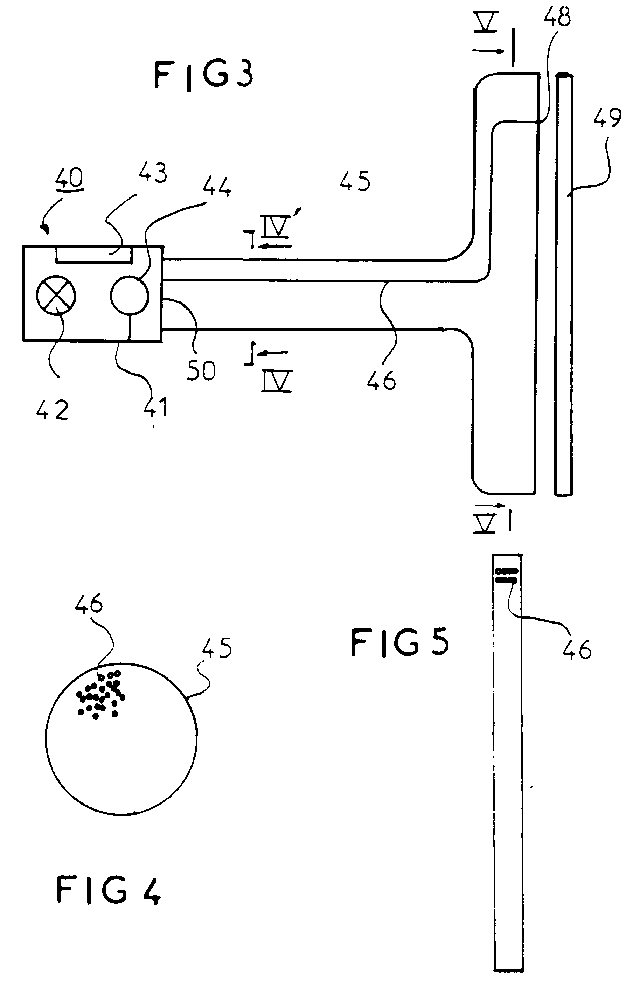

La figure 3 est une vue de côté d'un ensemble élémentaire formant une partie de la rampe d'éclairage.

La figure 4 est une coupe selon les flèches IV-IV de la figure 3 du faisceau de fibres optiques dans sa partie concentrée.

La figure 5 est une vue en coupe selon les flèches V-V de la figure 3 du faisceau de fibres optiques dans sa partie terminale étalée.

La figure 6 est une coupe de détail de l'extrémité des fibres optiques et du barreau caractéristique montrant le trajet des rayons lumineux.

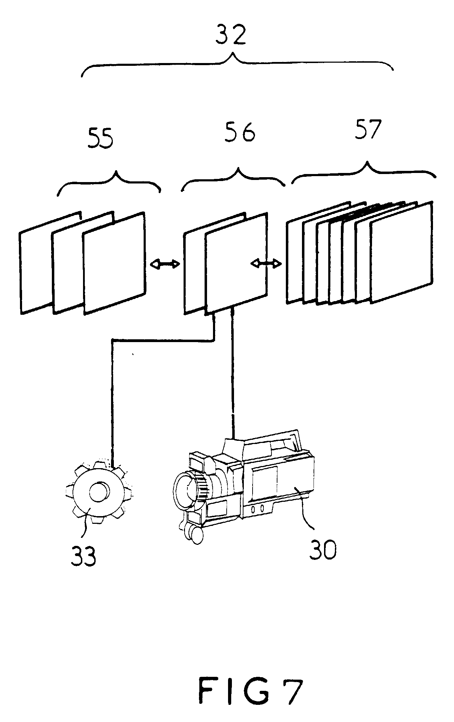

La figure 7 est un synoptique général de l'unité centrale de traitement.

### Manière de réaliser l'invention

L'invention concerne un dispositif de contrôle de l'état de surface d'une bande en défilement qui trouve son intérêt tout particulier dans l'application à la visite d'étoffe textile telle qu'un tissu sur des machines généralement appelées "visiteuses".

Une visiteuse comporte un circuit de défilement du tissu devant un opérateur (A), ainsi qu'un ensemble d'éléments de contrôle et de commande du défilement.

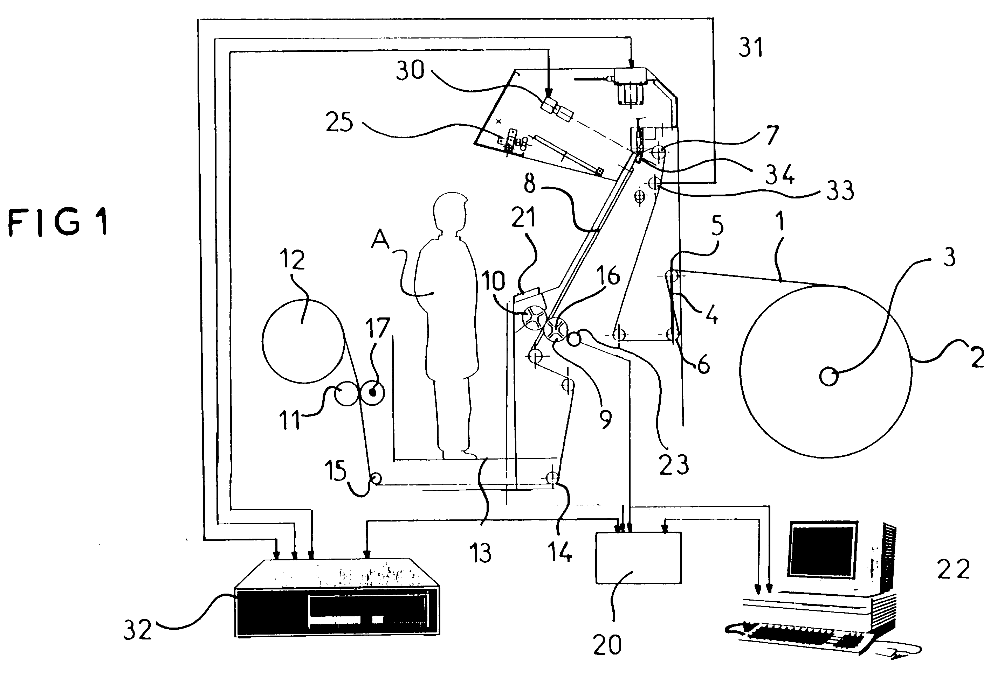

La figure 1 illustre une architecture particulière de cette visiteuse perfectionnée selon l'invention.

Le tissu (1) à inspecter se présente sous la forme d'une ensouple (2) formant un rouleau de diamètre important, entraîné en rotation par des moyen d'alimentation connus (3). Le tissu déroulé (1) passe dans un pantin (4) formé de deux rouleaux accouplés (5, 6), destinés à le maintenir sous une tension suffisante. Le tissu rencontre ensuite un rouleau de renvoi supérieur (7) après lequel il redescend sur la table de visite (8). Cette table de visite (8) est inclinée vers l'arrière pour permettre une vision optimale de l'opérateur (A).

Le défilement du tissu (1) est assuré sur la table de visite (8) par deux rouleaux moteurs (9, 10) en pression. Concomitamment, le tissu est amené à la zone d'enroulage par un ensemble de rouleaux (11) permettant la mise du tissu sous forme d'une ensouple (12). Bien entendu, les vitesses des systèmes de déroulage, de défilement et d'enroulage sont couplées. Généralement, l'opération de renroulage s'effectue derrière l'opérateur de sorte que le tissu passe sous le plancher sur lequel se trouve l'opérateur, au moyen d'une pluralité de rouleaux de renvoi (14, 15).

Les moteurs (3, 16, 17) respectivement associés au système de déroulage de 1' ensouple, au système de défilement (9, 10) et au système d'enroulage (11) sont du type asynchrones, commandés par des variateurs de type connu. La gestion de ces onduleurs est effectuée par un automate programmable (20) qui réalise le synchronisme entre les différents moteurs et assure la gestion des différentes séquences d'arrêt et démarrage lors de la détection d'un défaut.

Cet automate (20) est connecté à un clavier (21), disposé sur le pupitre de la visiteuse à portée de l'opérateur. Ce clavier (21) permet, lors de la détection d'un défaut, d'en indiquer le type. Ces informations sont transmises à l'automate (20) qui dialogue avec un micro-ordinateur (22) chargé de la mémorisation des défauts observés.

Pour localiser les défauts, le système d'entraînement des rouleaux moteurs (9, 10) est associé à une roue codeuse (23) entraînée par un des cylindres d'entraînement (10). L'information délivrée par cette codeuse est fournie à l'automate (20), afin qu'il détermine l'éventuelle longueur à renvider. Cette information est également transmise au micro-ordinateur (22), afin que celui-ci associe au type de défaut identifié sa localisation précise sur la bande de tissu (1) en défilement. Par la suite, l'ensemble de données concernant le défaut peut être stocké pour une utilisation ultérieure, imprimé ou encore visualisé en temps réel.

Le micro-ordinateur (22) est également relié à un système de visée laser classique (25) connu en soi permettant de déterminer la largeur de la laize contrôlée, afin d'en éviter les éventuelles variations.

Comme déjà dit, l'invention consiste à affranchir l'opérateur de la détection fastidieuse des défauts tout en lui permettant de concentrer son attention sur les tâches viables d'interprétation des défauts détectés.

A cet effet, selon l'invention la visiteuse comprend des moyens de détection automatique des défauts. Ces moyens sont essentiellement constitués par une caméra (30), une rampe d'éclairage (31), une unité centrale électronique de traitement (32), une roue codeuse supplémentaire (33) et une plaque polie (34) située sur le plan incliné (8) sur l'envers du tissu.

La rampe d'éclairage (31) permet d'obtenir une raie de lumière (36) disposée perpendiculairement à la direction de défilement du tissu, dans la partie haute de la table (8) de visite. Cette raie (36) doit être aussi puissante que possible afin de permettre la détection de tous types de défauts. Pour tenir compte des différents états de surface du tissu et de l'armure de tissage, cette rampe (31) d'éclairage est réglable en position par rapport à la table, donc par rapport au tissu. Ainsi, il est possible de régler la distance de la rampe (31) par rapport à la table (8) en la déplaçant selon une direction particulière à ladite table. Par ailleurs, il est également possible de régler l'angle d'incidence de la raie lumineuse (36) en faisant effectuer à ladite rampe (31) une rotation autour d'un axe parallèle au plan de défilement et perpendiculaire à la direction de défilement. Enfin, pour tenir compte des différentes tolérances mécaniques, il est également possible de modifier l'inclinaison de la rampe (31) en la faisant pivoter autour d'un axe parallèle à la direction de défilement. De la sorte, on parvient à approcher une extrémité latérale de la rampe tout en éloignant du tissu l'extrémité opposée de ladite rampe.

Chaque rampe élémentaire (31), (voir figure 4), comporte une source lumineuse (40) qui contient dans un boîtier (41), une lampe halogène de puissance typique cent cinquante watts, et un moyen de refroidissement du type ventilateur (43).

Ce boîtier est connecté à un faisceau (45) de fibres optiques. Compte-tenu de la puissance lumineuse mise en jeu, afin d'éviter la dégradation de la colle formant l'extrémité (50) du faisceau (45), on insère entre la lampe (42) et ledit faisceau un filtre anticalorique (44).

Le faisceau comprend plusieurs dizaines de milliers de fibres optiques parallèles rassemblées de manière concentrée sous forme d'un cylindre dans la zone extrêmale connectée à la source lumineuse (40).

Comme on l'a vu, une des caractéristiques principales de l'invention est de former une raie (36) de lumière grâce à la rampe lumineuse (31). A cet effet, 1' extrémité terminale du faisceau (45) est déployée et écartée afin de former un ensemble aussi rectiligne que possible. Les milliers de fibres optiques de diamètre typique de 50 microns sont réparties de manière rectiligne pour former sensiblement un rectangle ayant par exemple un petit côté de 300 microns et une longueur de 200 millimètres, comportant dans sa largeur environ quatre à six fibres optiques élémentaires superposées. La rampe est constituée de plusieurs faisceaux décrits ci-avant juxtaposés. Pour éviter que la lumière ne soit concentrée dans des zones spécifiques de chacun des faisceaux, les différentes fibres unitaires constituant chaque faisceau sont brassées pour assurer une répartition aléatoire des trajets de lumière. La puissance lumineuse dissipée par la source lumineuse (40) est mise sous la forme d'une raie (36) grâce au faisceau caractéristique de fibres optiques.

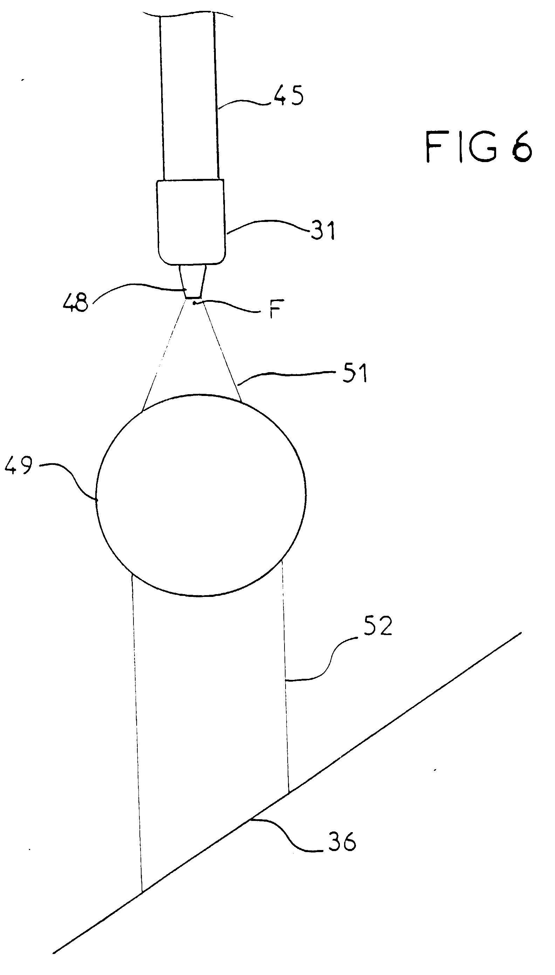

Conformément à une caractéristique essentielle de l'invention, pour améliorer la focalisation de la raie de lumière, la rampe (31) de fibres optiques présente un barreau (49) apte à générer un faisceau de rayons parallèles dirigé sur le tissu inspecté. Plus précisément, comme on le voit à la figure 6, ce barreau est positionné de telle sorte que le point focal objet (F) coïncide exactement avec l'extrémité (48) des fibres optiques. De la sorte, les rayons lumineux (51) issus des fibres optiques (48), qui divergent naturellement, sont déviés de telle manière à former un faisceau parallèle (52) orienté vers le tissu. Grâce à ce faisceau parallèle, le dispositif est insensible à la distance précise qui sépare le tissu à inspecter de l'ensemble de l'éclairage. Ainsi, cette distance est déterminée de manière suffisante pour permettre les manoeuvres de mise en place manuelle du tissu, sans nécessiter l'écartement ou le démontage de la rampe d'éclairage.

Cette rampe (31) est présente sur toute la largeur du tissu. Elle est réalisée à partir de rampes élémentaires de largeur sensiblement égale à vingt centimètres. Ainsi, pour une laize typique d'un mètre soixante de large, il est nécessaire d'associer huit rampes élémentaires.

La raie de lumière ainsi obtenue est observée par une caméra (30) également caractéristique. Cette caméra (30) comprend un système classique d'objectif et comporte à son foyer image un détecteur photosensible linéaire (58). Ce détecteur photosensible linéaire est une barrette de 2048 pixels de longueur, chaque pixel étant typiquement un carré de 14 micromètres de côté. Ainsi, et compte-tenu du rapport optique dû aux objectifs, cette barrette observe une largeur unitaire du tissu (1) en défilement. Concomitamment, toujours en fonction du rapport d'objectifs, cette barrette est apte à mesurer une longueur "l" du tissu dans son sens de défilement. Au fur et à mesure du défilement du tissu, et à chaque fois qu'une longueur "l" élémentaire unitaire est parcourue, la caméra (30) capte une image et la met à disposition de l'unité centrale de traitement (32). La barrette linéaire de capteurs photosensibles peut être remplacée par un capteur matriciel.

La détection du défilement de ladite longueur "l" est assurée grâce à la présence d'une roue codeuse supplémentaire (33) analogue à (23) associée au rouleau de renvoi (7). Cette roue codeuse (33) dont le pas de codage est bien évidemment inférieur à la distance caractéristique "l", est reliée à une carte d'acquisition (56) de l'unité centrale de traitement (32).

En fonction de l'information de défilement fournie par la roue codeuse (33), cette carte d'acquisition (56) envoie les ordres de déclenchement à la caméra (30).

Dans le même temps, le système électronique (32), (voir figure 6), qui comprend classiquement des cartes interfaces (55), des cartes d'acquisition (56) et un sous-ensemble de cartes (57) des traitements parallèles, analyse les images émises par la caméra selon des algorithmes de traitement permettant de détecter la présence d'une irrégularité ou d'un défaut sur le tissu en défilement. En outre, l'ensemble de traitement met en oeuvre des algorithmes de détermination du contraste des images obtenues permettant lors d'une phase d'apprentissage de déterminer et de règler la puissance d'éclairage des sources lumineuses en fonction de la qualité du tissu. Ainsi, par exemple il peut être intéressant d'éclairer plus fortement un tissu uni foncé qu'un tissu clair plus réfléchissant. Ce calibrage permet d'éviter la saturation des capteurs photosensibles. En outre, au fur et à mesure de l'usure des lampes d'éclairage, il peut être intéressant de rehausser l'intensité lumineuse.

Avantageusement, le système de traitement des images comporte une pluralité (57) de cartes à micro-processeurs mises en parallèle, ce qui bien entendu augmente la rapidité du traitement.

Sommairement le fonctionnement du dispositif est le suivant. Lorsque le tissu défile (1), la roue codeuse (33) communique en permanence l'information de longueur déroulée à l'unité centrale qui ordonne à la caméra les déclenchements séquencés. Après traitement des images émises par la caméra (30), l'unité centrale (32), en cas de détection d'un défaut, ordonne à l'automate programmable (20) de provoquer une séquence d'arrêt. A ce moment là, le tissu (1) étant arrêté, l'opérateur interprète le défaut observé et code le type de défaut sur le clavier (21). Cette information est alors transmise au micro-ordinateur (22) qui l'emmagasine en l'associant à la position du défaut sur la longueur totale du tissu, grâce au codeur (23)

Il ressort de ce qui précède que le dispositif de visite conforme à l'invention présente des avantages notables, en particulier :
- l'augmentation notoire de la vitesse de défilement visant une vitesse de soixante à quatre vingt voir cent mètres par minute ;
- par ailleurs, il permet d'éliminer la fatigue de l'opérateur qui dorénavant ne concentre son intention que sur les tâches viables d'interprétation à proprement parler ;
- l'utilisation de fibres optiques ne cause aucune dégradation du tissu, notamment pendant la phase d'arrêt du défilement, car les fibres optiques sont une source de lumière froide ;
- l'utilisation d'un barreau concentrateur permet de diminuer la puissance d'éclairage et donc d'augmenter la durée de vie des lampes;
- enfin, il permet d'obtenir une constance du contrôle ainsi qu'une augmentation du taux de défauts identifiés. En effet on estime que 50 % seulement des défauts sont détectés par vision humaine, tandis que plus de 80 % des défauts sont détectés grâce au système de vision automatique selon l'invention.

## Revendications

1. Dispositif pour l'inspection et la détection automatique de défauts sur une bande en défilement, telle qu'une étoffe textile, comprenant :
- un moyen d'entraînement (3, 9, 10) d'un enroulement de la bande à inspecter,
- des organes de renvoi (7, 14, 15) et de mise sous tension (4, 5 ,6) de la bande en défilement,
- un plan incliné (8) pour l'observation de la bande qui défile à plat sur ce plan (8),
- un moyen (31) pour éclairer sur toute la largeur une portion de la bande qui défile sur le plan incliné (8), formé par une rampe (31) constituée par une pluralité de fibres optiques (45) disposées côte à côte, alimentées par au moins une source de lumière (40), destinée à former sur la bande qui défile, une raie (36) élémentaire de lumière réfléchie et stabilisée,
- un moyen d'acquisition (30) des images de la bande qui défile constitué par au moins une caméra (30) portant une barrette de capteurs photosensibles (58) sur lesquels se forme l'image de la raie (36) élémentaire de lumière,
- des moyens pour traiter ces images constitués d'un système électronique de traitement (32) destiné à élaborer des signaux de défauts en fonction des images émises par les caméras (30),
- un moyen (11, 17) pour renvider sous forme d'enroulement (12) la bande inspectée,
- des moyens (20) pour piloter les moyens d'entraînement (3, 16) et les moyens de renvidage (17) lorsqu'on détecte un signal défaut,
- un moyen (22) pour mémoriser le positionnement sur la bande des défauts détectés,
caractérisé en ce que la rampe (31) comporte un barreau cylindrique transparent (49) dont le point focal objet coïncide avec l'extrémité (48) des fibres optiques, de manière à focaliser la lumière émise sur la bande qui défile.

2. Dispositif selon la revendication 1, caractérisé en ce que la rampe (31) est règlable en inclinaison, en direction et en position par rapport au plan incliné (8).

3. Dispositif selon la revendication 2, caractérisé en ce que le règlage en inclinaison, en direction et en distance de la rampe d'éclairage (31) est commandé par le système électronique (32) en fonction de l'état de surface et la structure de la bande en défilement.

4. Dispositif selon l'une des revendications 1 à 4, caractérisé en ce que la source lumineuse (31) est constituée d'une lampe halogène (42) stabilisée associée à un filtre anticalorique (44) disposé à une extrémité (47) d'un faisceau (45) compact de fibres optiques (46), dont l'autre extrémité (48) se présente sous la forme d'une rampe rectiligne dans laquelle les fibres élémentaires (46) sont disposées côte à côte.

5. Dispositif selon l'une des revendications 1 à 4, caractérisé en ce qu'il comporte un codeur (33) asservi à la caméra (30) pour déclencher celle-ci lorsque la bande avancée d'une longueur prédéterminée "l".

6. Dispositif selon la revendication 5, caractérisé en ce que le pas de codage du codeur est inférieur à la longueur de bande dont l'image est obtenue par le capteur photosensible linéaire (48).

7. Dispositif selon l'une des revendications 1 à 6, caractérisé en ce que le plan incliné (8) comprend une barre (51) polie, réfléchissant la lumière, disposée à l'envers de la bande défilante (1), pour coïncider avec la raie élémentaire (36) de lumière, destinée à réfléchir la partie de la lumière ayant traversé la bande défilante.

8. Dispositif selon l'une des revendications 1 à 7, caractérisé en ce qu'il comporte un second moyen d'éclairage destiné à éclairer la face du tissu en regard du plan incliné (8).

9. Dispositif selon la revendication 8, caractérisé en ce que le second moyen d'éclairage est constitué par une seconde rampe constituée d'une pluralité de fibres optiques.

10. Dispositif selon l'une des revendications 1 à 9, caractérisé en ce que l'intensité de la source lumineuse (40) est réglable en fonction du type de bandes à inspecter.
